# EUROPÄISCHE PATENTSCHRIFT

(11) **EP 1 284 886 B1**
(45) Veröffentlichungstag und Bekanntmachung des Hinweises auf die Patenterteilung: **30.08.2006**
(21) Anmeldenummer: 01945192.1
(22) Anmeldetag: 25.05.2001
(51) Int. Cl.: B60N 3/00, A47C 7/70, A47B 5/00, B61D 37/00, B64D 11/06

(54) **TISCHEINHEIT**
TABLE UNIT
ENSEMBLE TABLE

(30) Priorität: 31.05.2000 DE 10027230
(43) Veröffentlichungstag der Anmeldung: 26.02.2003
(73) Patentinhaber: Recaro Aircraft Seating GmbH & Co. KG, 74523 Schwäbisch Hall (DE)
(72) Erfinder: SALZER, Uwe, 88682 Salem (DE); SCHÜRG, Hartmut, 74523 Schwäbisch Hall (DE)
(74) Vertreter: Bartels, Martin Erich Arthur
(86) Internationale Anmeldenummer: PCT/EP2001/005997
(87) Internationale Veröffentlichungsnummer: WO 2001/092055

(56) Entgegenhaltungen:
- DE-A- 4 343 242
- DE-A- 19 705 754
- GB-A- 2 340 389
- US-A- 4 359 004
- US-A- 4 944 552
- US-A- 5 547 247
- US-A- 5 876 092
- US-A- 5 893 607
- PATENT ABSTRACTS OF JAPAN vol. 013, no. 033 (M-789), 25. Januar 1989 (1989-01-25) -& JP 63 242751 A (MATSUSHITA ELECTRIC IND CO LTD), 7. Oktober 1988 (1988-10-07)

## Beschreibung

Die Erfindung betrifft eine Tischeinheit für Fahrzeugsitze, insbesondere Fluggastsitze, mit den Merkmalen des Oberbegriffes des Patentanspruches 1.

Durch die US-A-5,547,247 ist eine gattungsgemäße Tischeinheit für Fahrzeugsitze bekannt mit einem Tischteil, dem eine zuordenbare Tischfunktion zukommt, wobei ein weiteres Tischteil mit mindestens einer weiteren Tischfunktion vorhanden ist und wobei die beiden Tischteile relativ zueinander um eine erste Schwenkachse über mindestens eine Gelenkstelle drehbar und in vorgebbaren Positionen festlegbar sind, wobei die beiden Tischteile um eine weitere Schwerikachse über mindestens eine weitere Gelenkstelle drehbar und in vorgebbaren Positionen festlegbar sind. Die bekannte Tischeinheit läßt sich in einer Armlehne eines Fluggastsitzes verstauen und von dort aus entnehmen. Zum Verstauen der Tischeinheit in der Sitzarmlehne sind die beiden Tischeinheiten um eine gemeinsame Schwenkachse in platzsparender Weise aufeinandergeklappt und im ausgezogenen Gebrauchszustand der Tischeinheit können bei aufgeklappter Lage die beiden Tischteile eine Tisch- und Funktionsebene ausbilden. Des weiteren sind die beiden zueinander schwenkbaren Tischteile an einem abklappbaren Schwenkarm an der Sitzlehne gehalten und die beiden Tischteile können gemeinsam um eine im wesentlichen vertikal verlaufende Schwenkachse dieses Armes verschwenkt werden, um dergestalt die gesamte Tischeinheit, sei es im aufgeklappten oder im zusammengeklappten Zustand, von einem Sitzbenutzer auf diesen zu oder von diesem wegzuschwenken. Eine SchrägStellung und mithin eine Schwenkbewegung aus der horizontalen Ausgangslage einer der beiden Tischteile ist nicht möglich, was die Nutzungsmöglichkeiten der bekannten Tischeinheit einschränkt.

Des weiteren ist durch die DE-A-197 05 754 eine Tischeinheit bekannt, die einen Klapptisch für einen Sitzplatz in einem Fahrzeug zur Fahrgastbeförderung betrifft, wobei in die Tischplatte des Klapptisches ein Bildschirm zur Realisierung einer Tischfunktion integriert ist. Der Bildschirm erstreckt sich lediglich über einen Teil der Tischfläche, wobei der verbleibende Teil der Tischfläche als Arbeitsfläche dienen kann. Die Tischplatte besteht wiederum aus zwei Tischteilen, die zueinander klappbar um eine gemeinsame Achse mit zugehörigen Gelenkstellen ausgeführt sind, wobei ein Teil zur Aufnahme des Bildschirmes und der andere Teil als Arbeitsfläche dient. Der den Bildschirm aufnehmende Teil der Tischplatte läßt sich gegenüber dem als Arbeitsfläche dienenden Teil der Tischplatte in mehrere Ruhepositionen klappen, um dem Betrachter einen geeigneten Blickwinkel auf den Bildschirm zu ermöglichen. Bei Nichtgebrauch läßt sich die Tischplatte in eine als Halterung für die Tischplatte dienende Konsole versenken, wobei die Konsole bei der bekannten Lösung aus einer Armlehne des Sitzplatzes selbst gebildet ist. Trotz dieser zusätzlichen Einstellmöglichkeit sind die Einstellmöglichkeiten an sich nach wie vor eingeschränkt und mit der bekannten Tischeinheit lassen sich demgemäß nur in begrenztem Rahmen unterschiedliche Tischfunktionen realisieren.

Ausgehend von diesem Stand der Technik liegt der Erfindung die Aufgabe zugrunde, die bekannten Tischeinheiten für Fahrzeugsitze, insbesondere Fluggastsitze, derart weiter zu verbessern, dass es möglich ist, verschiedene gewünschte Tischfunktionen in einer Tischeinheit zu integrieren und dennoch die mögliche Tischfläche und deren Position so zu variieren, dass sie zum einen eine wirksame Hilfe darstellt und zum anderen die Essenseinnahme erleichtert. Eine dahingehende Aufgabe löst eine Tischeinheit mit den Merkmalen des Patentanspruches 1 in seiner Gesamtheit.

Dadurch, dass gemäß dem kennzeichnenden Teil des Patentanspruches 1 jede Schwenkachse durch zwei Gelenkstellen definiert ist, die außenumfangsseitig an der Tischeinheit angeordnet sind, und dass eine Gelenkstelle als Mehrfachgelenk ausgebildet sowohl der einen als auch der anderen Schwenkachse zugeordnet ist, lassen sich verschiedene Tischfunktionen in den beiden Tischteilen integrieren und je nachdem, welches Tischteil dem Bediener zugewandt von diesem aufgeklappt wird, ist die jeweils ausgewählte Tischfunktion aktiviert und die nicht benötigten Tischfunktionen verbleiben in ihrem aufgeräumten Zustand, was auch den Vorteil hat, dass diese nicht beschädigt werden können. Wird beispielsweise ein Tischteil zum Verzehr von Speisen eingesetzt, ist es möglich, das andere Tischteil beispielsweise mit einer Rechnereinheit und einem Bildschirm als Tischfunktion versehen derart in eine Nichtgebrauchsstellung zu bringen, dass diese durch Speisereste nicht zerkratzt od. dgl. nicht beschädigt werden können. So lassen sich zum einen die beiden Tischteile bündig aufeinanderlegen oder unter Verdoppelung ihrer Tischflächen nebeneinanderliegend aufklappen. Darüber hinaus ist es möglich, was im Stand der Technik nicht nachweisbar ist, die beiden Tischteile über die zweite Schwenkachse in ihrer Neigung relativ zueinander derart einzustellen und mittels einer Festlegeeinrichtung festzulegen, dass auch in einer Komfortstellung des Sitzes bei geneigter Rückenlehne und bei aufeinandergeklappten Tischteilen das eine Tischteil dann in seiner Ausgangsstellung verbleibt und das dem Sitzbenutzer zugewandte Tischteil in eine entsprechende Schrägstellung über dem anderen Tischteil gebracht werden kann. Durch die derart geneigte Tischteilfläche ist dann eine verbesserte Ablesbarkeit des jeweiligen Informationsgehaltes, beispielsweise auch in Form von Zeitschriftenartikeln oder Büchem, gegeben, da die dann jeweilige Leseseite einen gleichmäßigen Abstand zu dem Betrachter einhält.

Bei einer besonders bevorzugten Ausführungsform der erfindungsgemäßen Tischeinheit ist jedem Tischteil eine Tischfunktion zuordenbar, insbesondere in Form einer Schminkhilfe und/oder einer Rechnereinheit und/oder einer Abstellmöglichkeit für Verpflegung und/oder einer Haltehilfe für Leseartikel. Demgemäß läßt sich mit nur einer Tischeinheit eine Vielzahl von Aufgabenstellungen lösen und der Komfort für einen Sitzbenutzer läßt sich derart deutlich erhöhen, ohne dass für die angesprochenen Tischfunktionen zusätzlicher Bauraum am jeweiligen Sitz vorgesehen werden müßte. In vorteilhafter Weiterausgestaltung der in der Tischeinheit integrierten Tischfunktionen ist vorgesehen, dass die jeweilige Funktionseinheit von einer Abdekkung derart abdeckbar ist, dass diese einen Teil der ebenen Tischfläche bildet, um somit die eigentliche Tischfunktion nicht zu beeinträchtigen.

Weitere vorteilhafte Ausführungsformen sind Gegenstand der Unteransprüche.

Im folgenden wird die erfindungsgemäße Tischeinheit anhand der Zeichnung näher erläutert. Es zeigen dabei in prinzipieller und nicht maßstäblicher Darstellung die
- Fig.1 und 2: eine Schrägansicht auf die Tischeinheit im zusammengeklappten und auseinandergeklappten Zustand;
- Fig.3: die Tischeinheit nach den Fig.1 und 2 mit geneigter Tischteilfläche;
- Fig.4a und 4b: ein Funktionsmodell einer der eingesetzten Gelenkstellen, dargestellt im zusammengeklappten Zustand gemäß der Fig.1 bzw. im aufgeklappten Zustand gemäß der Fig.2.

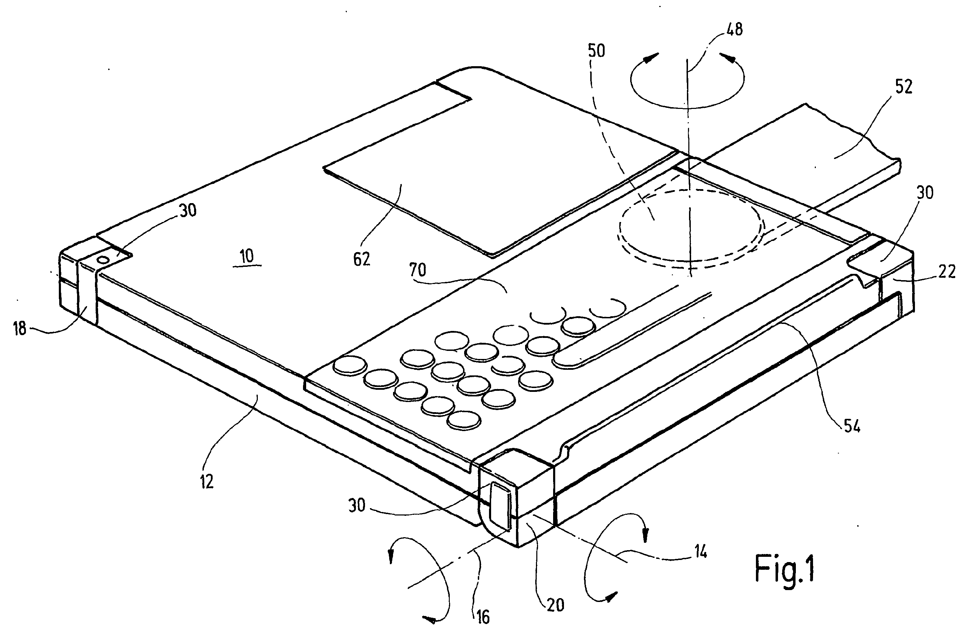

Die in den Figuren gezeigte Tischeinheit soll insbesondere im Bereich der Fluggastsitze eingesetzt werden. Es ist aber auch ohne weiteres möglich, solche Tischeinheiten im Bereich von Fährschiffen, Zügen, Reisebussen od.dgl. einzusetzen. Die Tischeinheit weist ein erstes Tischteil 10 auf, das gemäß der Darstellung nach der Fig.1 auf einem darunterliegenden weiteren Tischteil 12 aufliegt. Im aufeinandergelegten Zustand gemäß der Darstellung nach der Fig.1 schließen die beiden Tischteile 10,12 übereinanderliegend nach außen hin im wesentlichen bündig ab und bilden eine im wesentlichen quadratische Tischfläche aus. Die beiden Tischteile 10,12 sind, was im folgenden noch näher gezeigt werden wird, relativ zueinander um mindestens zwei Schwenkachsen über drei Gelenkstellen 18,20,22 drehbar und in vorgebbaren Positionen zueinander festlegbar. Die möglichen Dreh- oder Schwenkbewegungen des jeweiligen Tischteils 10,12 um die beiden Schwenkachsen 14,16 sind in der Darstellung nach der Fig.1 mit Doppelpfeilen wiedergegeben, wobei die beiden Schwenkachsen 14,16 senkrecht aufeinander stehen und in einer Tischebene liegen, die bei ausgezogener Tischeinheit aus einer Armlehne od.dgl. im wesentlichen horizontal verläuft.

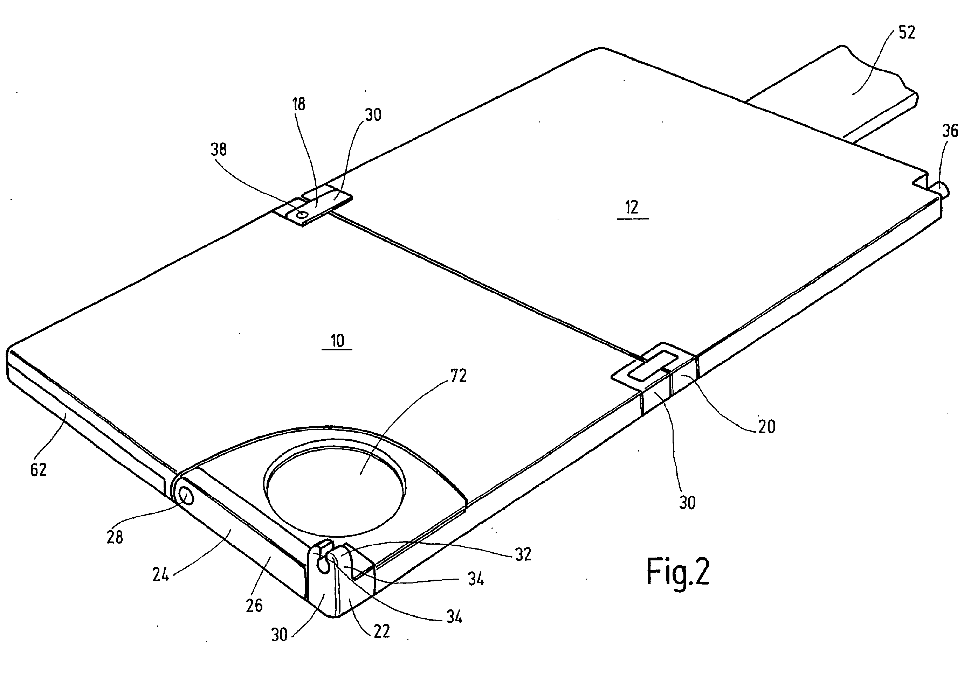

Schwenkt man in Blickrichtung auf die Fig.1 gesehen das obere Tischteil 10 entgegen dem Uhrzeigersinn um die Schwenkachse 14, nimmt die Tischeinheit ihre aufgeklappte Position gemäß der Darstellung nach der Fig.2 ein, wobei dann die beiden Tischteile 10,12 nebeneinanderliegend im wesentlichen eine rechteckförmige Tischfläche ausbilden, die vorzugsweise in ihrer Breite der Sitzbreite entspricht, so dass ein Sitznachbar in einer Fluggastsitzreihe durch die erweiterte Tischfläche nicht gestört wird. In dem dahingehend aufgeklappten Zustand eignet sich die Tischeinheit insbesondere als Eßtisch, wobei sich Speisen und Getränke gut auf der Tischfläche unterbringen lassen. Die dahingehende Eßtischfunktion erhöht den Komfort bei der Essenseinnahme durch einen Sitzbenutzer.

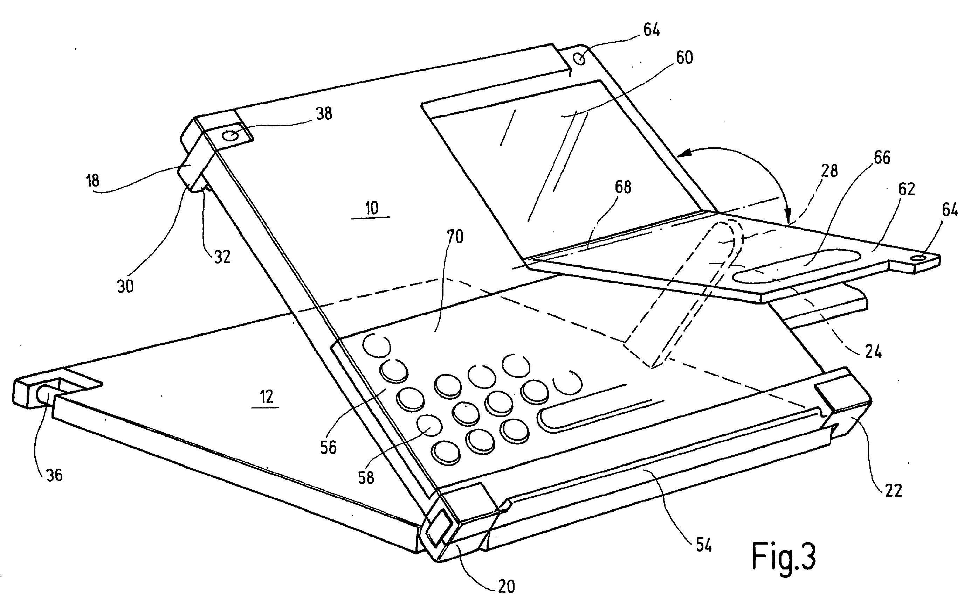

Darüber hinaus ist es aber auch möglich, das obere Tischteil 10 im Uhrzeigersinn über die zweite Schwenkachse 16 aus ihrer flachen horizontalen Lage nach der Fig.1 in eine geneigte Stellung nach der Fig.3 zu verbringen und in dieser geneigten Stellung mittels einer Festlegeeinrichtung 24 festzulegen. Bei der gezeigten Ausführungsform weist die Festlegeeinrichtung 24 einen in der Stellung nach der Fig.2 ausklappbaren Halter 26 auf, der in seiner Ausgangsstellung nach der Fig.2 bündig in einer außenumfangsseitig verlaufenden Ausnehmung des oberen Tischteils 10 aufgenommen ist. Der Halter 26 ist um einen Schwenkzapfen 28 drehbar an dem Tischteil 10 gelagert und kann beispielsweise aufgestellt eine Position einnehmen, wie sie in der Fig.3 strichliniert dargestellt ist, bei der in der geneigten Stellung des Tischteils 10 das freie Ende des Halters 26 sich auf der Oberseite des Tischteils 12 abstützt. Durch Verschwenken des Halters 26 und mithin durch Einstellen der Festlegeeinrichtung 24 läßt sich die Neigung gemäß den Vorgaben des Bedieners in vorgebbaren Winkelbereichen einstellen und festlegen. Anstelle des Halters 26 könnte die Festlegeeinrichtung 24 auch über eine Art Ratschenmechanismus (nicht dargestellt) realisiert sein, bei dem zumindest die Gelenkstelle 20 der Neigung des Tischteils 10 nachfolgt und die Gelenkstelle 20 ihre verschwenkte Position aufgrund der Ratschenanordnung beibehält. Die dritte Gelenkstelle 22 kann dabei zwangsgeführt der Ratschenbewegung nachfolgen und derart die Neigungseinstellung des Tischteils 10 sicherstellen.

Wie die bisherigen Ausführungen deutlich machen, ist jede Schwenkachse 14,16 durch je zwei Gelenkstellen oder Gelenkstellenpaare 18,20 bzw. 20,22 definiert. Die angesprochenen Gelenkstellen 18,20 und 22 sind in einem rechten Winkel zueinander außenumfangsseitig an der Tischeinheit angeordnet, wobei die Gelenkstelle 20 in einer Ecke zwischen den beiden anderen Gelenkstellen 18,22 angeordnet ist. Damit ist diese mittlere Gelenkstelle 20 sowohl der einen 14 als auch der anderen Schwenkachse 16 zugeordnet. Vorzugsweise ist für die Aufklapp- und die Neigebewegung des Tischteils 10 die Gelenkstelle 20 als sog. Kreuzgelenk technisch realisiert.

Alle Gelenkstellen 18,20,22 verfügen über ein Gelenkgehäuse 30, wobei für die Gelenkstellen 18 und 22 das jeweils zugeordnete Gelenkgehäuse 30 ein Verrastungsteil 32 aufweist in der Art einer Verrastungsklammer mit zwei Klammerbügeln 34. Die vorzugsweise aus einem elastisch nachgiebigen Kunststoffmaterial bestehenden Gelenkgehäuse 30 erlauben in der Art eines Schnapp- oder Klippteils über das Verrastungsteil 32 die lösbare Verbindung mit einem zuordenbaren Angriffsteil 36 in der Art eines Verbindungszapfens, der an dem jeweiligen Tischteil, hier das Tischteil 12, verbleibt (vgl. Fig.2 und 3). Das zapfenartige Angriffsteil 36 für die erste Gelenkstelle 18 ist dabei in einer U-förmigen Ausnehmung im Eckbereich des Tischteils 12 angeordnet, wohingegen das weitere Angriffsteil 36 für die dritte Gelenkstelle 22 in einer winkelförmigen Ausnehmung gleichfalls in einem anderen Eckbereich des Tischteils 12 mit seinem freien Ende in die Umgebung ragt. Das Angriffsteil 36 der ersten Gelenkstelle 18 verläuft innerhalb der ersten Schwenkachse 14 und das Angriffsteil 36 der dritten Gelenkstelle 22 ist Teil der weiteren zweiten Gelenkachse 16. Beim Auseinanderklappen der Tischteile 10 und 12 in die Position gemäß Fig.2 erfolgt also die Schwenkbewegung um das Angriffsteil 36 der ersten Gelenkstelle 18 und bei der Neigungseinstellung gemäß der Darstellung nach der Fig.3 erfolgt die Schwenkbewegung für das Tischteil 10 um das zapfenartige Angriffsteil 36 der dritten Gelenkstelle 22, wobei die als Mehrfachgelenk ausgebildete zweite Gelenkstelle 20 der dahingehenden Schwenk- oder Neigebewegung nachfolgt.

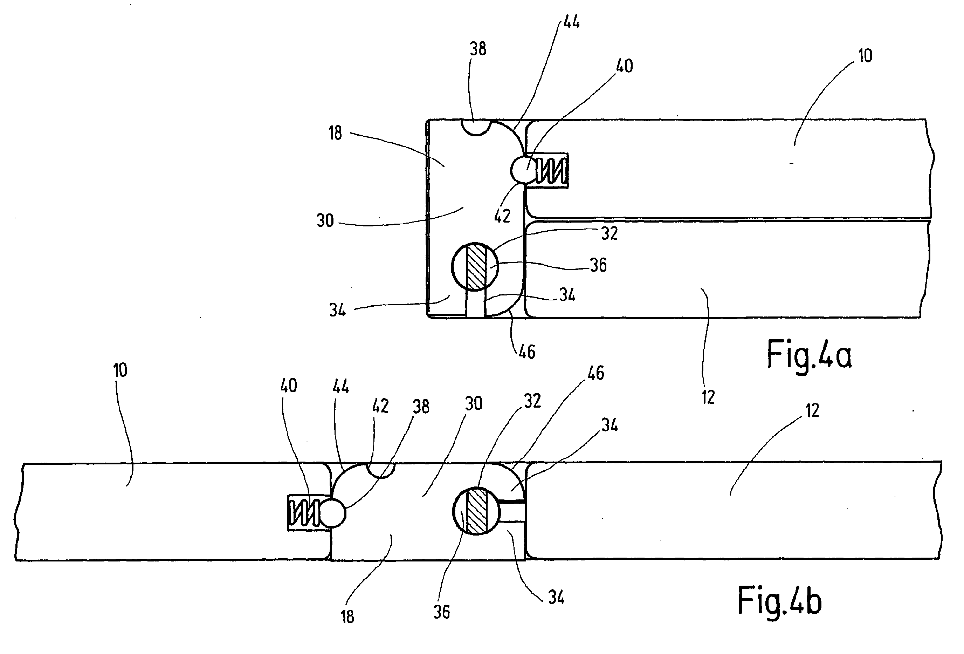

Des weiteren weist das Gelenkgehäuse 30 der ersten Gelenkstelle 18 eine Mitnahme 38 auf, so dass das eine obere Tischteil 10 bei der Aufklappbewegung von der Position nach der Fig.1 in die Position nach der Fig.2 über die Mitnahme 38 das zugeordnete Gelenkgehäuse 30 so lange um das Angriffsteil 36 der ersten Gelenkstelle 18 und mithin um das andere Tischteil 12 verschwenkt, bis die beiden Tischteile 10,12 mit den beiden Gelenkgehäusen 30 von erster Gelenkstelle 18 und zweiter Gelenkstelle 20 die ebene Tischfläche bilden. Die Mitnahme 38 ist dabei, wie dies insbesondere die Fig.4a und 4b zeigen, aus einer mittig angeordneten kalottenartigen Ausnehmung gebildet, die sowohl in vertikaler Anordnung (vgl. Fig.4a) als auch in horizontaler Anordnung (vgl. Fig.4b) in einer Ebene liegt zu dem Angriffsteil 36. Für die angesprochene Mitnahme des Gelenkgehäuses 30 der ersten Gelenkstelle 18 ist das obere Tischteil 10 auf seiner dem Gelenkgehäuse 30 zugewandten Seite mit einem federbelasteten Schließteil 40 versehen.

Wird das Tischteil 10 nun entgegen dem Uhrzeigersinn aus seiner Grundstellung nach der Fig.4a nach oben geschwenkt, gerät das Schließteil 40 außer Eingriff mit der halbkugelförmigen Ausnehmung 42, indem das Schließteil 40 zwangsgeführt sich entgegen der Kraft der Schließfeder in Richtung aus der Ausnehmung 42 innerhalb des Tischteils 10 herausbewegt. Bei der weiteren Aufklappbewegung gleitet dann das Schließteil 40 entlang der bogenförmigen Anlagefläche 44 des Gelenkgehäuses 30, bis das Tischteil 10 mit seiner Längsausrichtung senkrecht zu dem unteren Tischteil 12 angeordnet ist (nicht dargestellt). In dieser Stellung verrastet dann die Schließkugel 40 federbelastet mit der Mitnahme 38, und zwar derart kraft- und formschlüssig, dass bei der weiteren Aufklappbewegung des Tischteils 10 aus seiner vertikalen Lage (nicht dargestellt) in die horizontale Aufklappstellung gemäß der Fig.2 das Gelenkgehäuse 30 mitgenommen wird, und zwar in Form einer Schwenkbewegung entgegen dem Uhrzeigersinn um das Angriffsteil 36 und mithin um die Schwenkachse 14.

Die dahingehende Aufklappstellung entspricht für die erste Gelenkstelle 18 der Darstellung nach der Fig.4b. Neben der Kreuzgelenkstelle 20 ist dann das Tischteil 10 über das verrastete Schließteil 40 und über das Gelenkgehäuse 30 der ersten Gelenkstelle 18 in horizontaler Ausrichtung an dem weiteren Tischteil 12 festgelegt. Obere und untere Tischfläche von Tischteil 10 und Tischteil 12 liegen dann in einer Ebene mit den Außenseiten entlang den Längsrändern des Gehäuses 30 der ersten Gelenkstelle 18. Vergleichbar ist die Anordnung für die zweite Gelenkstelle 20 gehalten. Die Breite bzw. die Höhe des Gelenkgehäuses 30 für die erste und zweite Gelenkstelle 18 bzw. 20 entspricht also im wesentlichen der Dicke der Tischteile 10,12. Die Rückschwenkbewegung erfolgt dann entsprechend umgekehrt und, nachdem das Schließteil 40 in Eingriff ist mit der halbkugelförmigen Ausnehmung 42, ist derart wiederum das Gehäuse 30 in seine Position nach der Fig.4a zurückbewegt, wobei das Tischteil 10 mit seiner Unterseite in Anlage ist mit der Oberseite des Tischteils 12.

Über eine weitere halbkreisförmige Abrollfläche 46 des Gelenkgehäuses 30 für die erste Gelenkstelle 18 wird die dahingehende Zu- und Wegschwenkbewegung erleichtert, indem die Abrollfläche 46 entsprechend an der zugeordneten freien Stirnseite des Tischteils 12 abgleiten kann. Bei der dahingehenden Aufklappbewegung wird die dritte Gelenkstelle 22 über ihr Verrastungsteil 32 außer Eingriff mit dem zugeordneten Angriffsteil 36 gebracht. Gleichfalls in umgekehrter Abfolge findet dann eine Verrastung statt über die dritte Gelenkstelle 22, sofern die beiden Tischteile 10,12 übereinanderliegend angeordnet sind oder das Tischteil 10 über die Schwenkachse 16 im Uhrzeigersinn gegenüber der Horizontalen geneigt wird. In einem dahingehenden Fall schwenkt dann das Gelenkgehäuse 30 der dritten Gelenkstelle 22 um den zugeordneten Angriffszapfen 36.

Des weiteren sind beide Tischteile 10,12 in jeder relativen Position zueinander um eine gemeinsame Drehachse 48 verschwenkbar, die senkrecht zu den beiden Schwenkachsen 14,16 verläuft. Die dahingehende Drehachse 48 ist Teil eines Drehtellers 50 (vgl. Fig.1), über den die beiden Tischteile 10,12 entlang den Doppelpfeilen schwenkbar an einem Tischarm 52 angelenkt sind. Über den dahingehenden Tischarm 52 läßt sich beispielsweise die Tischeinheit in einer Armlehne des Fahrzeugsitzes unterbringen oder an der Rückseite eines Vordersitzes herunterklappbar anordnen. Vorzugsweise ist auch der Tischarm 52, wie die Tischteile 10,12, aus einem robusten Kunststoffmaterial gefertigt. Aus Platzersparnisgründen ist der Drehteller 50 integraler Bestandteil des unteren Tischteils 12 und in dessen Tischfläche zusammen mit Teilen des Tischarmes 52 bündig integriert. Entsprechend sind beidseitig des Drehtellers 50 Freiräume im Tischteil 12 vorhanden, um eine Dreh- oder Schwenkbewegung um die Drehachse 48 nicht zu behindern.

Wie insbesondere die Fig.1 bis 3 zeigen, ist eine Vielzahl von Tischfunktionen in den Tischteilen 10,12 integriert, wobei es sich hier nur um Arbeitsbeispiele handelt, die sich entsprechend variieren lassen. Als besonders vorteilhaft hat es sich jedoch erwiesen, zwischen den beiden Gelenkstellen 20 und 22 auf der Oberseite des Tischteils eine vorstehende Lippe 54 anzuordnen, die beispielsweise als Abstützhilfe für ein Buch, eine Zeitschrift od.dgl. dient. Darüberliegend angeordnet kann eine Rechnereinheit 56 vorgesehen sein, beispielsweise in Form eines üblichen Taschenrechners oder eines sog. Notebooks, wobei über die Eingabetastatur 58 auch eine Schreibfunktion über ein Display od.dgl. realisierbar wäre. In Blickrichtung auf die Fig.1 und 3 gesehen darüber angeordnet ist ein Schminkspiegel 60 vorhanden, der von einer aufklappbaren Abdeckung 62 abdeckbar ist. Über eine Schnapp- oder Klippverbindung 64 läßt sich die dahingehende Abdeckung 62 bündig in der Tischfläche des Tischteils 10 unterbringen.

Um eine ebene Tischoberfläche zu erreichen, ist demgemäß der Schminkspiegel 60 in der Tiefe zurückversetzt innerhalb des Tischteils 10 angeordnet. Des weiteren läßt sich innerhalb der im wesentlichen rechteckförmigen Abdeckung 62 auf ihrer dem Schminkspiegel 60 zugewandten Innenseite, vorzugsweise in einem dem Benutzer zugewandten Außenbereich, eine vertiefte Ablagehilfe 66 vorsehen. Die Längsausrichtung der vertieften Ablagehilfe 66 verläuft dabei parallel zur Aufklappachse 68 der Abdeckung 62. Die Aufklappachse 68 wiederum ist parallel verlaufend angeordnet zu der Schwenkachse 16. Vorzugsweise ist der freie Verfahrweg der Abdeckung 62 auf einen bestimmten Winkelbetrag begrenzt, beispielsweise 120°. Vorzugsweise jedoch sollte bei einem geneigten Tischteil 10 die Abdeckung 62 mit Ablagehilfe 66 im wesentlichen in einer horizontalen Ebene angeordnet sein parallel zur Tischfläche des Tischteils 12 verlaufend. Im übrigen weist auch die Rechnereinheit 56 eine dahingehende schalenartige, vorzugsweise teildurchsichtige Abdeckung 70 auf.

Wie des weiteren die Fig.2 zeigt, kann beispielsweise auf der Unterseite des Tischteils 10 eine kreisrunde Ausnehmung 72 vorhanden sein, die eine Abstellmöglichkeit für Gläser und Tassen bildet, wobei die Ausnehmung 72 derart vertieft sein kann, daß eine randseitige Umfassung für Gläser und Tassen in deren Bodenbereich erfolgt, um somit insbesondere bei unruhiger Reise, wie bei Aufkommen von Turbulenzen, einen sicheren Halt für die dahingehende Verpflegung zu ermöglichen. Die dahingehende Abstellmöglichkeit kann optisch gegenüber der sonstigen Fläche des Tischteils 10 abgegrenzt sein. Ferner kann die dahingehende Abstellmöglichkeit 72 nach außen hin in den Bereich des Halters 26 münden, der bündig mit der Au-βenumfangsfläche des Tischteils 10 abschließt. Ferner kann der Halter 26 mit seinem freien Ende an die zugewandte Stirnseite des Gelenkgehäuses 30 der dritten Gelenkstelle 22 angreifen, sofern, wie in der Fig.2 dargestellt, der Halter in das Tischteil 10 eingeklappt ist. Seine aufgestellte Lage ist für einen vorgebbaren Neigungswinkel in der Fig.3 wiedergegeben. Die Integration von weiteren Tischfunktionen wäre denkbar, wie beispielsweise eine Rufmöglichkeit für einen Bordservice od.dgl.. Insbesondere bei dem sehr engen Raumangebot an Bord von Flugzeugen od.dgl. stellen Multifunktionstische im Sinne der Erfindung eine deutliche Bereicherung des Komforts dar.

## Patentansprüche

1. Tischeinheit für Fahrzeugsitze, insbesondere Fluggastsitze, mit einem Tischteil (10), dem eine zuordenbare Tischfunktion zukommt, wobei ein weiteres Tischteil (12) mit mindestens einer weiteren Tischfunktion vorhanden ist, wobei die beiden Tischteile (10,12) relativ zueinander um eine erste Schwenkachse (14) über mindestens eine Gelenkstelle (18,20) drehbar und in vorgebbaren Positionen festlegbar sind und wobei die beiden Tischteile (10,12) um eine weitere Schwenkachse (16) über mindestens eine weitere Gelenkstelle (20,22) drehbar und in vorgebbaren Positionen festlegbar sind, **dadurch gekennzeichnet, dass** jede Schwenkachse (14,16) durch zwei Gelenkstellen (18,20;20,22) definiert ist, die außenumfangsseitig an der Tischeinheit angeordnet sind, und dass eine Gelenkstelle (20) als Mehrfachgelenk ausgebildet sowohl der einen (14) als auch der anderen (16) Schwenkachse zugeordnet ist.

2. Tischeinheit nach Anspruch 1, **dadurch gekennzeichnet, dass** die beiden Tischteile (10,12) sich über die erste Schwenkachse (14) bündig aufeinanderlegen oder unter Verdoppelung der Tischfläche nebeneinander liegend aufklappen lassen.

3. Tischeinheit nach Anspruch 1 oder 2, **dadurch gekennzeichnet, dass** die beiden Tischteile (10,12) über die zweite Schwenkachse (16) in ihrer Neigung relativ zueinander einstellbar und mittels einer Festlegeeinrichtung (24) in der vorgebbaren Neigestellung festlegbar sind.

4. Tischeinheit nach einem der Ansprüche 1 bis 3, **dadurch gekennzeichnet, dass** die zwei Gelenkstellen (18,20;20,22) in Eckbereichen der Tischeinheit angeordnet sind.

5. Tischeinheit nach einem der Ansprüche 1 bis 4, **dadurch gekennzeichnet, dass** die Gelenkstellen (18,20,22) über ein Gelenkgehäuse (30) verfügen, das für mindestens eine Gelenkstelle (18,22) ein Verrastungsteil (32) aufweist für die lösbare Verbindung mit einem zuordenbaren Angriffsteil (36), das an einem der Tischteile (12) verbleibt.

6. Tischeinheit nach Anspruch 5, **dadurch gekennzeichnet, dass** mindestens eines der Gelenkgehäuse (30) derart mit einer Mitnahme (38) versehen ist, dass das eine Tischteil (10) bei der Aufklappbewegung über die Mitnahme (38) das Gelenkgehäuse (30) so lange um das Angriffsteil (36) des anderen Tischteils (12) verschwenkt, bis die beiden Tischteile (10,12) mit Gelenkgehäuse (30) eine ebene Tischfläche bilden.

7. Tischeinheit nach einem der Ansprüche 1 bis 6, **dadurch gekennzeichnet, dass** die beiden Tischteile (10,12) um eine gemeinsame Drehachse (48) verschwenkbar sind, die senkrecht zu den beiden Schwenkachsen (14,16) der Tischteile (10,12) verläuft.

8. Tischeinheit nach einem der Ansprüche 1 bis 7, **dadurch gekennzeichnet, dass** jedem Tischteil (10,12) eine unterschiedliche Tischfunktion zuordenbar ist, insbesondere eine Schminkhilfe (60) und/oder eine Rechnereinheit (56) und/oder eine Abstellmöglichkeit (72) für Verpflegung und/oder eine Haltehilfe (54) für Leseartikel aufweist.

9. Tischeinheit nach Anspruch 8, **dadurch gekennzeichnet, dass** zumindest ein Teil der Tischfunktionen in dem jeweiligen Tischteil (10,12) integriert und von einer Abdeckung (62,70) derart abdeckbar ist, dass die Abdeckung (62,70) einen Teil der ebenen Tischfläche bildet.

## Claims

1. Table unit for vehicle seats, especially airplane seats, with a table part (10) with an allocatable table function, whereby a further table part (12) with at least one further table function is provided, whereby the two table parts (10, 12) can be rotated via at least one joint (18, 20) around a first tilt axis (14) relative to each other and affixed in pre-determinable positions, and whereby the two table parts (10, 12) can be rotated around a further tilt axis (16) via at least one further joint (20, 22) and affixed in pre-determinable positions, **characterised in that** each tilt axis (14, 16) is defined by two joints (18, 20; 20, 22) which are located around the outer circumference of the table unit, and **in that** a joint (20) takes the form of a multi-joint and is associated with one (14) as well as the other (16) tilt axis.

2. Table unit according to Claim 1, **characterised in that** the two table parts (10, 12) can be positioned or folded flat on top of each other or unfolded to lie adjacent each other to double the table surface via a first tilt axis (14).

3. Table unit according to Claim 1 or 2, **characterised in that** the two table parts (10, 12) can be adjusted via the second tilt axis (16) in their incline relative to each other, and affixed by means of an affixing means (24) in the pre-determinable incline position.

4. Table unit according to one of the Claims 1 to 3, **characterised in that** the two joints (18, 20; 20, 22) are located in corner areas of the table unit.

5. Table unit according to one of the Claims 1 to 4, **characterised in that** the joints (18, 20, 22) comprise a joint housing (30) equipped with an arresting part (32) for at least one joint (18, 22) for the disconnectable connection with an associated counter part (36), which remains on one of the table parts (12).

6. Table unit according to Claim 5, **characterised in that** at least one of the joint housings (30) is equipped with a follower (38) in such a way that one table part (10) is tilted around the counter part (36) of the other table part (12) during the unfolding movement via the follower (38) of the joint housing (30) until the two table parts (10, 12) form a level table surface with the joint housing (30).

7. Table unit according to one of the Claims 1 to 6, **characterised in that** the two table parts (10, 12) can be tilted around a common axis of rotation (48) extending vertical in relation to the two tilt axis (14, 16) of the table parts (10, 12).

8. Table unit according to one of the Claims 1 to 7, **characterised in that** a different table function can be allocated to each table part (10, 12), especially a cosmetic mirror (60) and/or a computer unit (56) and/or a positioning aid (72) for meals and/or a support (54) for reading matter.

9. Table unit according to Claim 8, **characterised in that** at least a part of the table function is integrated into the relevant table part (10, 12) and can be covered by with cover (62, 70) in such a way that the cover (62, 70) forms a part of the level table surface.

## Revendications

1. Unité de table pour sièges de véhicules, notamment des sièges de passagers d'avions, comprenant une partie de table (10) à laquelle revient une fonction de table pouvant lui être affectée, l'unité de table comprenant en outre une autre partie de table (12) ayant au moins une autre fonction de table, les deux parties de table (10, 12) pouvant tourner relativement l'une par rapport à l'autre autour d'un premier axe de pivotement (14), par l'intermédiaire d'au moins une zone d'articulation (18, 20), et pouvant être immobilisées dans des positions susceptibles d'être prédéfinies, et les deux parties de table (10, 12) pouvant tourner l'une par rapport à l'autre autour d'un autre axe de pivotement (16) par l'intermédiaire d'au moins une autre zone d'articulation (20, 22) et pouvant être immobilisées dans des positions susceptibles d'être prédéfinies, **caractérisée en ce que** chaque axe de pivotement (14, 16) est défini par deux zones d'articulation (18, 20 ; 20, 22) qui sont agencées sur l'unité de table au niveau de la périphérie extérieure de celle-ci, et **en ce qu'**une zone d'articulation (20) est réalisée en tant qu'articulation multiple et est associée aussi bien à l'un (14) qu'à l'autre axe d'articulation (16).

2. Unité de table selon la revendication 1, **caractérisée en ce que** les deux parties de table (10, 12) peuvent, par l'intermédiaire du premier axe de pivotement (14), être superposées en coïncidence, ou être déployées pour être adjacentes l'une à l'autre en doublant la surface de table.

3. Unité de table selon la revendication 1 ou 2, **caractérisée en ce que** les deux parties de table (10, 12) peuvent, par l'intermédiaire du deuxième axe de pivotement (16), être réglées quant à leur inclinaison l'une par rapport à l'autre, et peuvent être immobilisées, au moyen d'un système d'immobilisation (24), dans la position d'inclinaison pouvant être prédéfinie.

4. Unité de table selon l'une des revendications 1 à 3, **caractérisée en ce que** les deux zones d'articulation (18, 20 ; 20, 22) sont agencées dans des zones de coin de l'unité de table.

5. Unité de table selon l'une des revendications 1 à 4, **caractérisée en ce que** les zones d'articulation (18, 20, 22) disposent d'un boitier d'articulation (30) qui, pour au moins une zone d'articulation (18, 22), présente une partie d'encliquetage (32) pour la liaison amovible avec une pièce d'action (36) pouvant lui être associée et restant sur l'une des parties de table (12).

6. Unité de table selon la revendication 5, **caractérisée en ce que** l'un au moins des boitiers d'articulation (30) est pourvu d'un entraîneur (38) de manière telle que ladite une partie de table (10), lors du mouvement de déploiement, fasse pivoter, par l'intermédiaire de l'entraîneur (38), le boitier d'articulation (30) autour de la pièce d'action (36) de l'autre partie de table (12), jusqu'à ce que les deux parties de table (10, 12) avec les boitiers d'articulation (30) forment une surface de table plane.

7. Unité de table selon l'une des revendications 1 à 6, **caractérisée en ce que** les deux parties de table (10, 12) peuvent pivoter autour d'un axe de rotation (48) commun, qui s'étend perpendiculairement aux deux axes de pivotement (14, 16) des parties de table (10, 12).

8. Unité de table selon l'une des revendications 1 à 7, **caractérisée en ce qu'**à chaque partie de table (10, 12) peut être affectée une fonction de table différente, les parties de table pouvant notamment présenter un accessoire d'aide au maquillage (60) et/ou une unité de calculatrice (56) et/ou une possibilité de pose (72) pour nourriture ou subsistances et/ou un support auxiliaire (54) pour des articles de lecture.

9. Unité de table selon la revendication 8, **caractérisée en ce qu'**au moins une partie des fonctions de table est intégrée dans la partie de table (10, 12) respective, et peut être recouverte par un élément de recouvrement (62, 70) de manière telle, que l'élément de recouvrement (62, 70) forme une partie de la surface de table plane.
